Europäisches Patentamt

European Patent Office

Office européen des brevets

Publication number: **0 367 226**

**A2**

# EUROPEAN PATENT APPLICATION

Application number: **89120197.2**

Int. Cl.⁵ **G06F 15/64**

Date of filing: **31.10.89**

Priority: **01.11.88 JP 277820/88**

Date of publication of application:
**09.05.90 Bulletin 90/19**

Designated Contracting States:
**DE FR GB**

Applicant: **SEIKO EPSON CORPORATION**
**4-1, Nishi-Shinjuku 2-chome**
**Shinjuku-ku Tokyo(JP)**

Inventor: **Ohmoto, Ryuji**
**c/o Seiko Epson Corporation No. 3-5 Owa**
**3-chome**
**Suwa-shi Nagano(JP)**
Inventor: **Sonehara, Hidenori**
**c/o Seiko Epson Corporation No. 3-5 Owa**
**3-chome**
**Suwa-shi Nagano(JP)**

Representative: **DIEHL GLAESER HILTL &**
**PARTNER**
**Patentanwälte Flüggenstrasse 13**
**D-8000 München 19(DE)**

Character pattern data storing apparatus and character pattern generating apparatus.

The exclusive OR of the bit pattern data of an original character and a second character pattern obtained by shifting the data by one bit in the direction of printing is obtained for each dot, the data are sampled in a unit region which is composed of one dot in the direction of printing and a plurality of dot in the direction of non-printing, and one of the binary data is stored if non of the unit regions contain any dot while a dot presence/absence data consisting of the other of a binary signal is stored if any of the unit regions contain a dot together with auxiliary data which indicates the position of the dot in the unit region. A character pattern apparatus is provided with the character pattern data storing apparatus, a read means, a dot generating means, an exclusive OR calculating means and a develop buffer.

*FIG. 10*

# CHARACTER PATTERN DATA STORING APPARATUS AND CHARACTER PATTERN GENERATING APPARATUS

The present invention relates to a system for condensing character pattern data so as to be suitable for an output apparatus which requires a character pattern of a high quality, and a character pattern generating apparatus which develops such character pattern data.

A character pattern of a high quality, namely a character pattern composed of a multiplicity of dots, requires a memory unit having a vast capacity for storing character pattern data because the dot information which constitutes such a character pattern is very large.

As a countermeasure, various techniques of condensing character pattern data before storing them have been proposed, as shown in Japanese Patent Laid-Open Nos. 28827 1972, 81440 1975, 138787 1981 and 115278 1988.

These proposed techniques, however, are disadvantageous in that the method of sampling data from the original pattern, which is necessary for condensation, is so complicated that it is unpractical in the case in which a multiplicity of sampling points are necessary as in a pattern for a high-quality pattern.

Accordingly, it is an object of the present invention to eliminate the above-described problems in the prior art and to provide a character pattern data storing apparatus which is capable of storing high-quality character pattern data with a high concentration rate by a simple operation, namely, a logic operation of the original character pattern, and a character pattern generating apparatus using such a character pattern data storing apparatus.

To achieve this aim, in the present invention, the exclusive OR of the bit pattern data of an original character and a second character pattern obtained by shifting the data by one bit in the direction of printing is obtained for each dot, the data are sampled in a unit region which is composed of one dot in the direction of printing and a plurality of dots in the direction of non-printing, and one of the binary data is stored if none of the unit regions contain any dot while a dot presence/absence data consisting of the other of a binary signal is stored if any of the unit regions contain a dot together with auxiliary data which indicates the position of the dot in the unit region.

According to the present invention, data on the edge portions of a pattern are collected for each dot by bit shifting and logical differentiation, namely, exclusive OR. On the other hand, the unit regions having no dots and the regions having dots on both sides thereof are collectively treated as the same unit group, thereby reducing the amount of information.

The above object as well as other objects, features and advantages of the present invention will become clear from the following description of a preferred embodiment thereof, taken in conjunction with the accompanying drawings.

The present invention will be explained in more detail with reference to the exemplary embodiment shown in the accompanying drawings, in which:

FIGURE 1 shows an example of a character pattern used for the explanation of the principle of the present invention;

FIGURES 2(I) to 2(V) are explanatory views of the method of concentrating pattern data in accordance with the present invention;

FIGURE 3 is a schematic view of an example of a form of storing character pattern data in accordance with the present invention;

FIGURES 4 and 5 are schematic views of the data structures of respective character pattern storing apparatuses;

FIGURE 6 is a block diagram of an embodiment of a character pattern generating apparatus according to the present invention;

FIGURE 7 is a schematic view of an example of a developing buffer in the apparatus shown in FIGURE 6;

FIGURES 8(I) to 8(VIII) are explanative views of the operation of the apparatus shown in FIGURE 6; and

FIGURES 9 and 10 are flowcharts of the operation of the apparatus shown in FIGURE 6.

The system of concentrating a character pattern data in accordance with the present invention will first be explained:

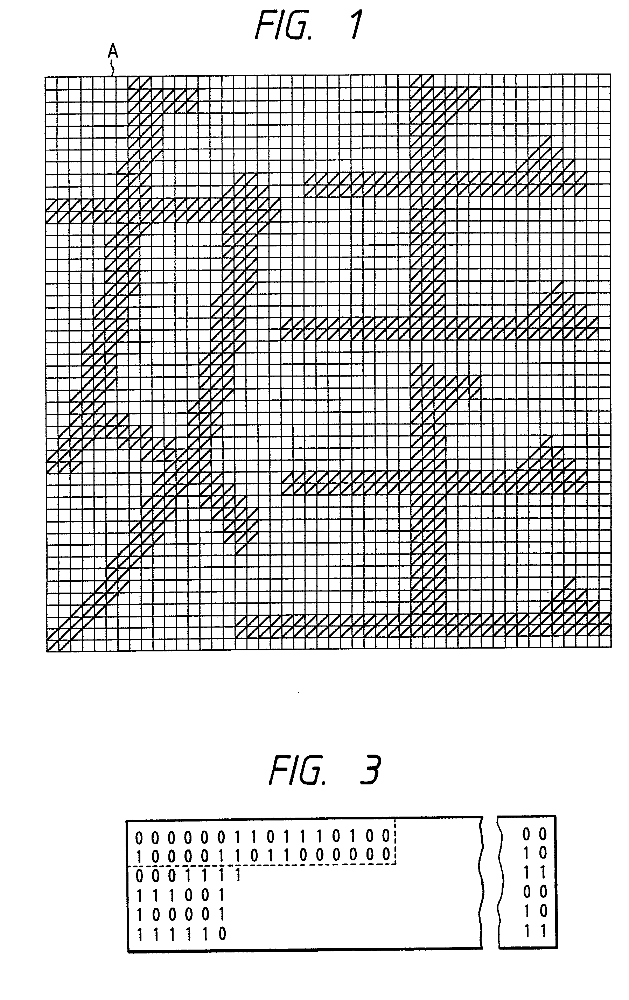

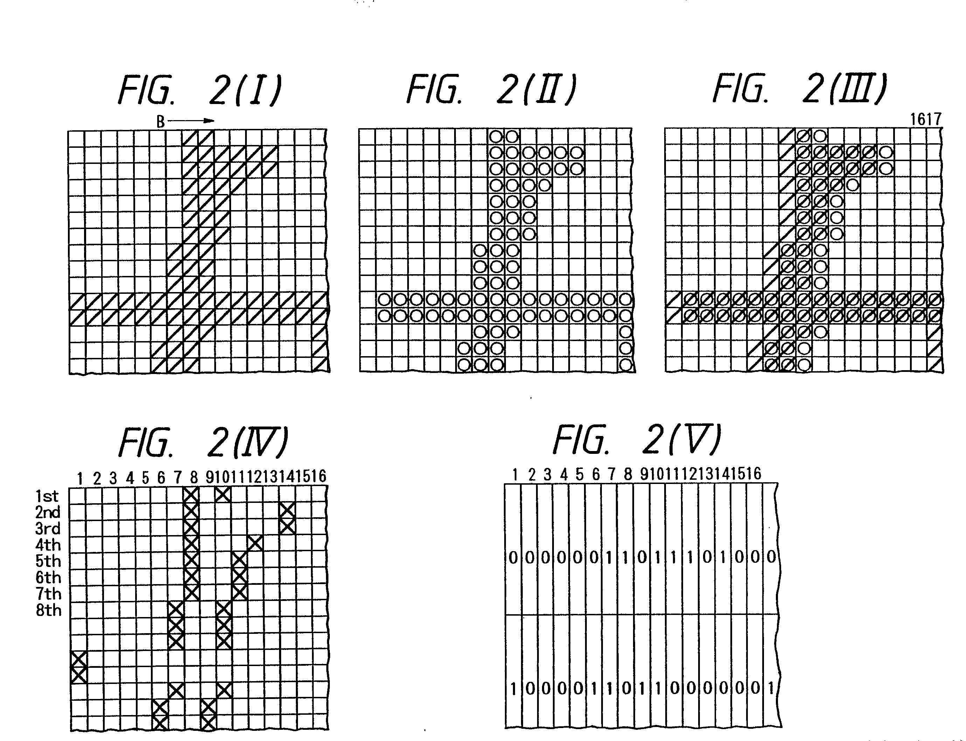

FIGURE 1 schematically shows a character pattern which constitutes a high-quality character obtained by converting an original pattern into data in the form of dots at a sampling density of 48 dots x 48 dots, and FIGURE 2 show a part of the pattern (the region A in FIGURE 1) extracted from the pattern shown in FIGURE 1 for the purpose of simplifying explanation.

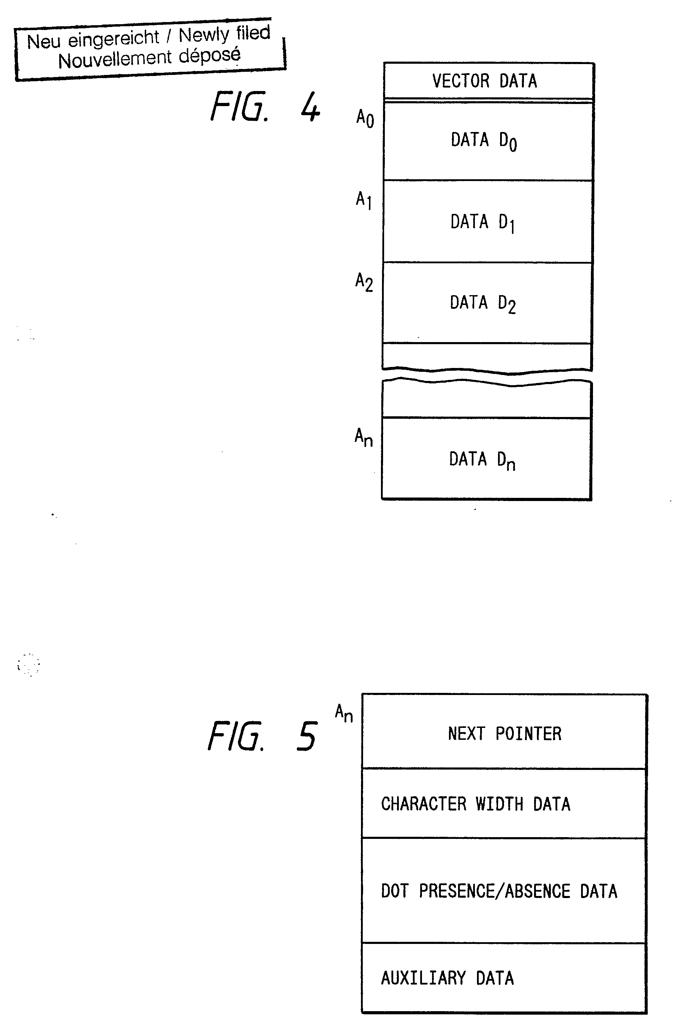

FIGURE 2(I) shows the region A extracted from the pattern shown in FIGURE 1, as described above. The region A is shifted by one dot in the direction of scanning of the printing head, namely, in the right-hand direction (indicated by the arrow B) in this embodiment to form the pattern shown in FIGURE 2(II) and the exclusive OR with the original pattern I is obtained, whereby only the edge portions in the transverse direction (represented by the marks in FIGURE 2(IV)) are extracted, as shown in FIGURE 2(IV). The pattern data (IV) with only the edge portions in the direction of scanning extracted is divided into columns, each consisting of first to eighth dots as a treatment unit. If there is no dot in any of the units, the signal is set at "0", while if there is a dot in any of the units, the signal is set at "1". Dot presence absence data is generated in this manner and is stored in a dot presence absence data storing portion as auxiliary data, as shown in FIGURE 2(V). Such auxiliary data is stored in each unit of one character, thereby constituting character pattern data for one character, as shown in FIGURE 3.

If such a concentrating system is used, it is possible to treat a unit containing do not on the original pattern and the unit with all the units on both sides thereof containing dots among the units on the original pattern as the same kind of data, thereby reducing the amount of data. Especially, in the case of a character which contains a multiplicity of the same components in succession in the direction perpendicular to the direction of printing, for example, "kanji", one unit is included either in the ground portion or in the linework portion, thereby enhancing the data concentrating effect.

FIGURE 4 schematically shows the data structure of a character pattern data storing circuit which stores contracted character pattern data. At the head, vector data showing the character pattern storing region is stored, and the subsequent regions are divided into a plurality of blocks for storing $2^n$ times as much as the information processing unit, e.g., 32 characters in this embodiment. Each block stores a next pointer, character width data, dot presence/absence data, and auxiliary data, as shown in FIGURE 5.

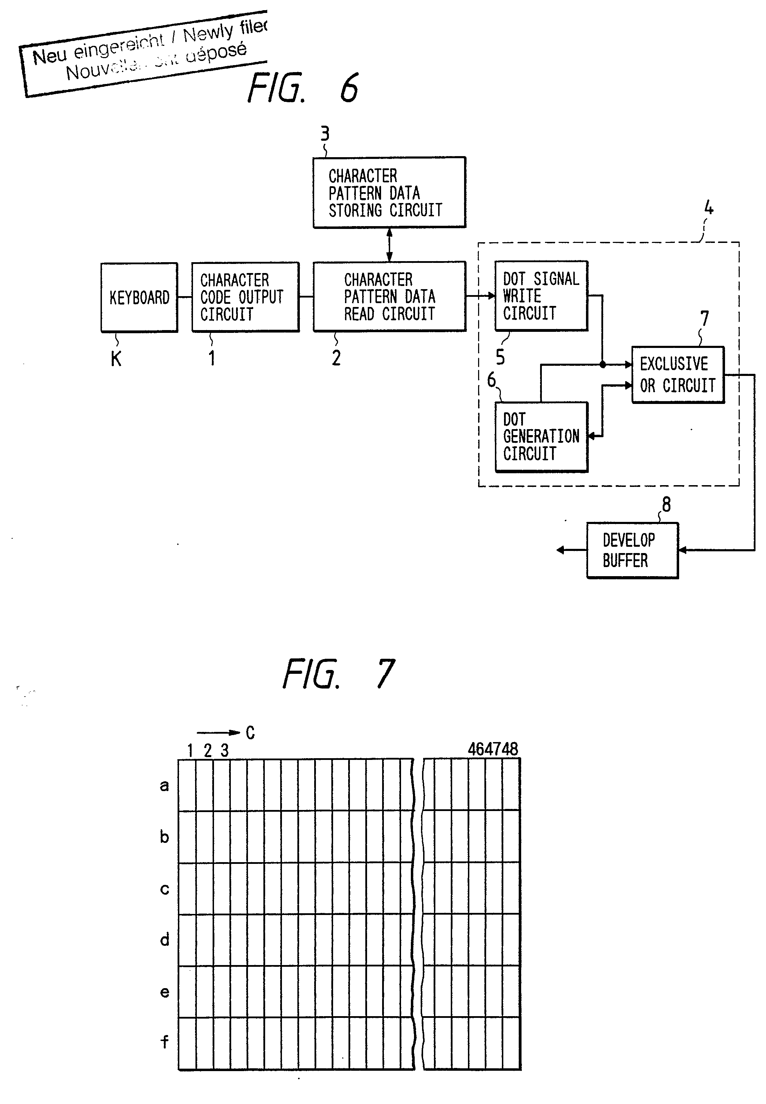

FIGURE 6 shows an embodiment of the present invention. The reference numeral 1 denotes a character code output circuit for generating a character code signal input from a keyboard K and the code signal is input to a character pattern data read circuit 2 which accesses a character pattern data storing circuit 3 to read the character pattern data which agrees with the input character code signal data and auxiliary data together if the character pattern data signal indicates the presence of a dot (in the case of the data "1") and to output these obtained data to a later-described character pattern restoring circuit 4.

The character pattern restoring circuit 4 is composed of a dot signal write circuit 5, a dot generation circuit 6 and an exclusive OR circuit 7.

The dot signal write circuit 5 has the same number of buses as the number of dots, e.g., 8 in this embodiment, and outputs a zero dot signal for 1 unit to the exclusive OR circuit 7 when the data indicates the absence of a dot, and generates the dot signal "1" from the bus corresponding to the dot address assigned by the auxiliary data when the data indicates the presence of a dot.

The dot generation circuit 6 has buses for 1 unit, namely, 8 buses, and when it receives a signal from the dot write circuit 5 and is in the set state, it outputs the signal "1" to the corresponding bus of the exclusive OR circuit 7 irrespective of the dot data until it assumes a reset state. After the dot signal "1" is input and written for the nth time in the direction of scanning, if n is an odd number, the corresponding bus of the dot generation circuit 6 is set while it is reset when n is an even number.

The exclusive OR circuit 7 has the same number of buses as the dot signal write circuit 5 and the dot signal generation circuit 6, calculates the exclusive OR of the signals output from these circuits 5 and 6 and outputs the result to a unit of a later-described develop buffer 8.

In the develop buffer 8, 1 unit is composed of 1 dot in the direction of scanning (indicated by the arrow C) and a plurality of dots, 8 dots in this embodiment, in the direction of non-scanning. The develop buffer 8 is provided with 48 x 6 units, as shown in FIGURE 7, and the results of calculations in the exclusive OR circuit 7 are written in the corresponding units in series.

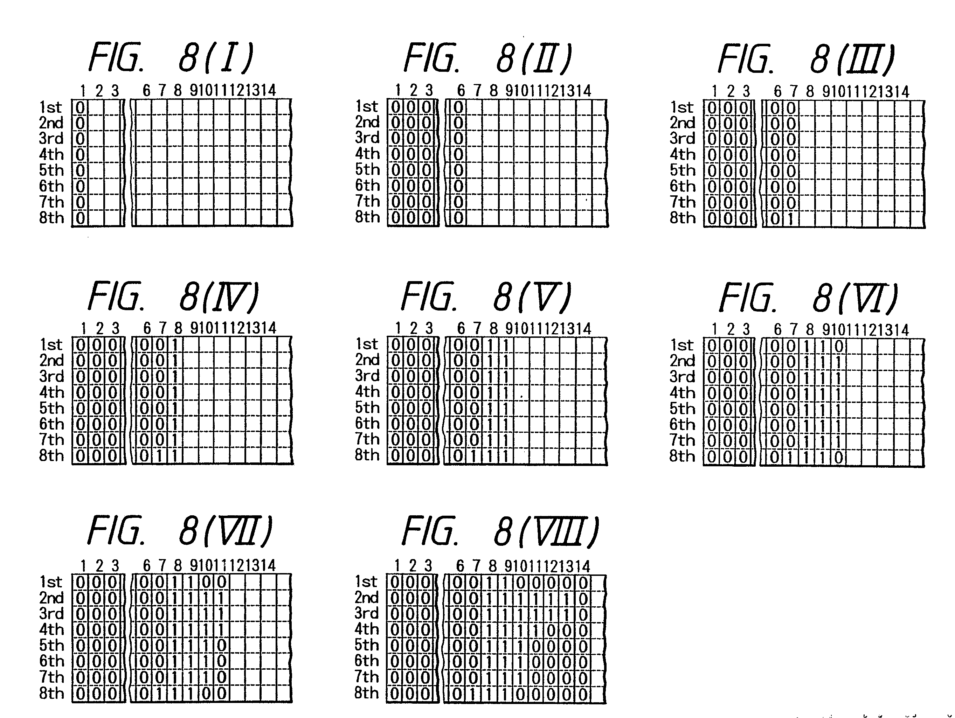

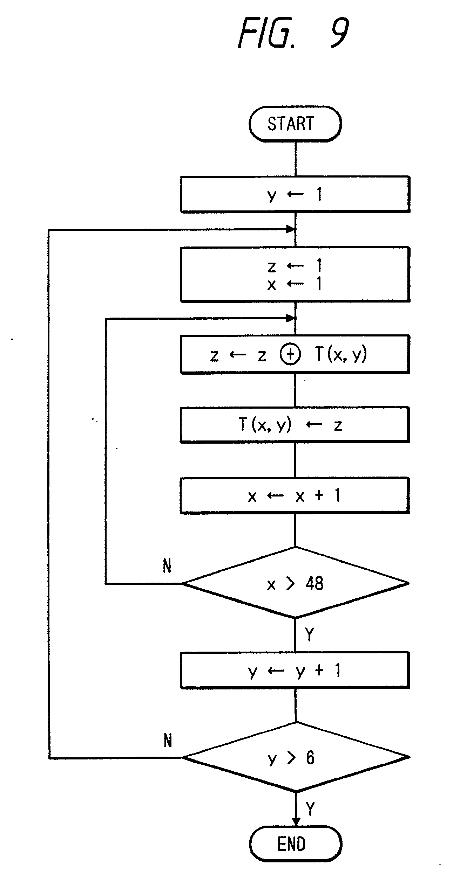

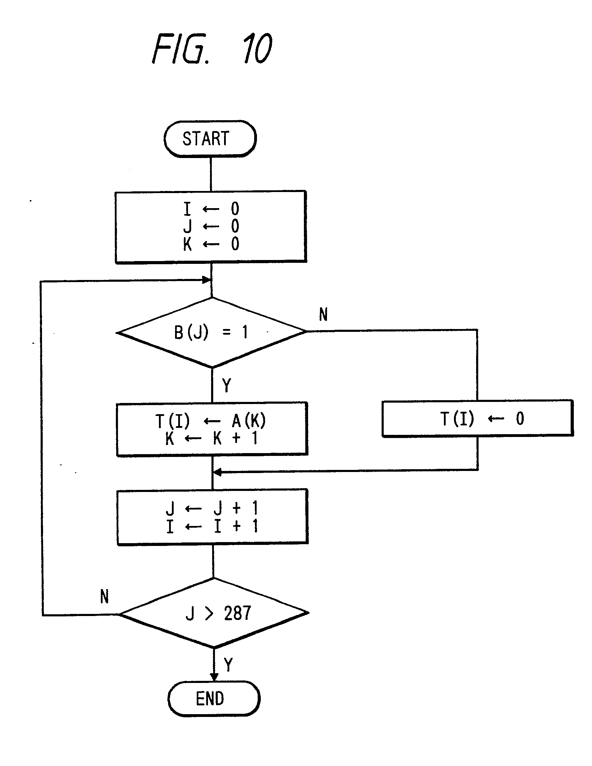

The operation of the apparatus having the above-described structure will be explained next with reference to the operative explanative view in FIGURE 8 and the flowcharts in FIGURES 9 and 10.

When character data is input from the keyboard K, the character data output circuit 1 outputs a code signal corresponding thereto. The character pattern data read circuit 2 receives the code signal and accesses the address at which the character pattern data which agrees with the code signal is stored and reads out in the presence or absence of the dot from the head of the corresponding character pattern data.

In the current case, since the data is "0", the dot signal write circuit 5 outputs a zero dot signal "0" from the first through eighth buses. At this stage, since each bus of the dot generation circuit 6 is not in the set state, namely, is in the reset state, do not signal is output.

Consequently, the exclusive OR circuit 7 outputs a zero dot signal from the first to eighth buses and, as a result, a zero dot signal is written in each of the first through eighth dots in the first unit (FIGURE 7, 1 a) of the develop buffer 8, as shown in FIGURE 8(I).

When the writing in the first unit is finished, the pointer in the character pattern storing circuit 3 is shifted by one, and reading in the second column is executed. In this example, since the second through sixth columns are continuously blank, zero dot signals are written in succession in the first through eighth dots in the second through sixth columns in the same process as in the first column. as shown in FIGURE 8(II).

When the pattern data for the seventh column is read. since the dot presence absence signal is "1". the dot write signal 5 reads auxiliary data, as shown in FIGURE 6. and generates a dot signal in the dot in which a dot exists (the eighth dot) among the first through eighth dots in the seventh column, and zero dot signals in the other dots. On the other hand, since all the buses of the dot generation circuit are still in the reset state, the exclusive OR circuit 7 generates a dot signal in the eighth dot and zero dot signals in the first through seventh dots. In other words. a dot signal is written only in the eighth dot in the seventh column of the develop buffer 8. Simultaneously. since the eighth dot in the seventh column is written for the first time, the bus of the dot generation circuit 6 which corresponds to the eighth dot is set. as shown in FIGURE 8(III).

Since the dot presence absence signal in the next column (eighth column) is "1" as in the seventh column, the dot write circuit 5 generated dot signals in the first through seventh dots in accordance with the auxiliary signal. On the other hand, although do not exists in the eighth dot in the auxiliary data. since the eighth bus of the dot generation circuit 6 assumes the set state at the precedent step, a dot signal is also produced in the eighth dot. The signals in each bus of the dot write circuit 5 and the dot generation circuit 6 are calculated by the exclusive OR circuit 7 and, as a result. dot signals are written in all of the first to eighth dots, as shown in FIGURE 8(IV). At the same time. since the first to seventh dots receive the written dot for the first time, the first through seventh buses of the dot generation circuit 7 are set, whereby all the buses of the dot generation circuit 6 assume the set state.

The dot presence/absence data in the ninth column is "0", in other words, there is no dot. The dot write circuit 5 therefore outputs zero dot signal to the first to eighth dots. On the other hand, since all of the first to eighth buses of the dot generation circuit 6 are in the set state and the dot generation circuit 6 generates dot signals in the first to eighth dots, dot signals are generated from all buses of the exclusive OR circuit 7, so that the same dot signals as in the original pattern are written in the first to eighth dots of the develop buffer 8, as shown in FIGURE 8(V).

In the tenth column, since the dot presence/absence data is "1", the dot write signal 5 generates dot signals in the corresponding dots on the basis of auxiliary data, namely, in the first and the eighth dots.

However, since the first to eighth buses of the dot generation circuit 6 are in the set state, dot signals are output, whereby the exclusive OR circuit 7 outputs zero dot signals from the first and the eighth buses and dot signals from the second to seventh buses, as shown in FIGURE 8(VI).

In other words. since n, of the nth time for which the dot signal is written in the dot generation circuit, is an even number, the corresponding bus is reset, and the resetting operation and the calculation of the exclusive OR remove a surplus dot signal by one dot in the direction of scanning which is generated at the time of formation of the pattern data, thereby restoring the pattern data to the original pattern.

When the eleventh column is read out. since the dot presence absence data is "1". dot signals are generated from the fifth and the seventh buses of the dot write signal 5 on the basis of the auxiliary signal. However, since the second to seventh buses of the dot generation circuit 6 are in the set state. dot signals are written in the second to fourth buses of the develop buffer 8. After writing the dot signals in the develop buffer 8, the fifth to seventh buses of the dot generation circuit 6 are reset in which n, of the nth time for which the dot signal is written, is an even number, as shown in FIGURE 8-(VIII).

Thereafter, when n, of the nth time for which the dot signal is written by the dot write circuit 5, is an odd number dot generation circuit 6 is set and dots are written in the same way even if there is on dot in the character pattern data until the n becomes an even number, as shown in FIGURE 8-(VIII).

After writing is completed in the 48th column (a row in FIGURE 7) in this way, the pointer is moved and restoration is executed at the unit in the next row (b row in FIGURE 7).

When the character pattern of the designated character is developed in this way, the data are transferred to the buffer of an output device, and the apparatus is prepared for the development of the next pattern.

Although the pattern data are restored in series for each column from the head in this embodiment, it is clear that it is possible to restore the character pattern at a high speed by simultaneously reading the pattern data for a plurality of rows.

It is also clear that although printing is carried out in the horizontal direction in this embodiment, the same effect is obtained in the case of printing in the vertical direction by creating the columns in the vertical direction for extraction and restoration.

As described above, according to the present invention, the exclusive OR of the dot pattern data of an original character and a second character pattern obtained by shifting the data by one bit in the direction of printing is obtained for each dot, the data are sampled in a unit region which is composed of one dot in the direction of printing and a plurality of dots in the direction of non-printing, and one of the binary data is stored if none of the unit regions contain any dot while a dot presence absence data consisting of the other of a binary signal is stored if none of the unit regions contain any dot together with auxiliary data which indicates the position of the dot in the unit region.

In addition, since data on the edge portions of a pattern are collected for each dot by bit shifting and simple logical differentiation, namely, exclusive OR, and the unit regions having no dots and the regions having dots on both sides thereof are collectively treated as the same unit group, it is possible to reduce the amount of information.

Furthermore, since the apparatus according to the present invention is provided with a read means for accessing the corresponding storing regions in accordance with the character code signals which the means has received so as to read the corresponding character pattern data stored by the above-described technique in the order in which the data have been stored, a dot generating means for outputting zero dot signals in all corresponding regions when the dot presence absence data is one data and outputting a dot signal on the basis of auxiliary data when the dot presence absence data is the other data and for setting the dot generating means when n, of the nth time for which the dot signal is written in the direction of scanning, is an odd number and resetting the dot generating means when n is an even number so as to output dot signals from the times when n, of the nth time for which the dot signal is written, is an odd number to the time when n becomes an even number, an exclusive OR calculating means for calculating the exclusive OR of the signals of the read means and the dot generation means, and a develop buffer for storing the signals from the exclusive OR calculating means in series, so that it is possible to restore the original dot pattern from a small amount of information with reliability and at a high speed.

While there has been described what are at present considered to be preferred embodiments of the invention, it will be understood that various modifications may be made thereto, and it is intended that the appended claims cover all such modifications as fall within the true spirit and scope of the invention.

Claims

1. A method for storing character pattern data comprising the steps of:
obtaining the exclusive OR of a dot pattern data of an original character and a second character pattern obtained by shifting said dot pattern data by one bit in a direction of printing for each dot;
sampling said data in a unit region which is composed of one dot in the direction of printing and a plurality of dots in a direction corresponding to non-printing; and
storing a binary data if none of the unit regions contain any dot while storing a dot presence/absence data consisting of a different binary signal if any of said unit regions contain a dot together with auxiliary data which indicates the position of the dot in said unit region.

2. A character pattern generating apparatus comprising:
a character pattern data storing means for obtaining the exclusive OR of a dot pattern data of an original character and a second character pattern obtained by shifting said data by one bit in the direction of printing for each dot, sampling said data in a unit region which is composed of one dot in a direction of printing and a plurality of dots in a direction corresponding to non-printing, and storing a binary data if none of the unit regions contain any dot while storing a dot presence/absence data consisting of a different binary signal if any of said unit regions contain a dot together with auxiliary data which indicates the position of the dot in said unit region; a read means for accessing the corresponding storing regions in accordance with the character code signals which said read means has received so as to read the corresponding character pattern data in the order in which said data have been stored;
a dot generating means for outputting zero dot signals in all corresponding regions when the dot presence/absence data is one data and outputting a dot signal on the basis of auxiliary data when said dot presence/absence data is the other data and for setting said dot generating means when n, for an nth time for which said dot signal is written in the direction of scanning, is an odd number and resetting said dot generating means when n is an even number so as to output dot signals from a time when n, for the nth time for which said dot signal is written is an odd number to a time when n becomes an even number;
an exclusive OR calculating means for calculating the exclusive OR of the signals of said read means and said dot generation means; and
a develop buffer for storing the dot signals from said exclusive OR calculating means in series.

## FIG. 1

A

## FIG. 3

| | | | | | | | | | | | | | | | | | | | | |
|---|---|---|---|---|---|---|---|---|---|---|---|---|---|---|---|---|---|---|---|---|
| 0 | 0 | 0 | 0 | 0 | 0 | 1 | 1 | 0 | 1 | 1 | 1 | 0 | 1 | 0 | 0 | | | 0 | 0 |
| 1 | 0 | 0 | 0 | 0 | 1 | 1 | 0 | 1 | 1 | 0 | 0 | 0 | 0 | 0 | 0 | | | 1 | 0 |
| 0 | 0 | 0 | 1 | 1 | 1 | 1 | | | | | | | | | | | | 1 | 1 |
| 1 | 1 | 1 | 0 | 0 | 1 | | | | | | | | | | | | | 0 | 0 |
| 1 | 0 | 0 | 0 | 0 | 1 | | | | | | | | | | | | | 1 | 0 |
| 1 | 1 | 1 | 1 | 1 | 0 | | | | | | | | | | | | | 1 | 1 |

89 120 197
SEIKO EPSO

Neu eingereicht / Newly filed
Nouvellement déposé

EP 0 367 226 A2

## FIG. 2(I)

B→

## FIG. 2(II)

## FIG. 2(III)

1617

## FIG. 2(IV)

|  | 1 | 2 | 3 | 4 | 5 | 6 | 7 | 8 | 9 | 10 | 11 | 12 | 13 | 14 | 15 | 16 |
|---|---|---|---|---|---|---|---|---|---|----|----|----|----|----|----|----|
| 1st |
| 2nd |
| 3rd |
| 4th |
| 5th |
| 6th |
| 7th |
| 8th |

## FIG. 2(V)

| 1 | 2 | 3 | 4 | 5 | 6 | 7 | 8 | 9 | 10 | 11 | 12 | 13 | 14 | 15 | 16 |
|---|---|---|---|---|---|---|---|---|----|----|----|----|----|----|----|
| 0 | 0 | 0 | 0 | 0 | 0 | 1 | 1 | 0 | 1 | 1 | 1 | 0 | 1 | 0 | 0 | 0 |
| 1 | 0 | 0 | 0 | 0 | 1 | 1 | 0 | 1 | 1 | 0 | 0 | 0 | 0 | 0 | 1 |

FIG. 4

VECTOR DATA

$A_0$ — DATA $D_0$

$A_1$ — DATA $D_1$

$A_2$ — DATA $D_2$

$A_n$ — DATA $D_n$

FIG. 5

$A_n$

NEXT POINTER

CHARACTER WIDTH DATA

DOT PRESENCE/ABSENCE DATA

AUXILIARY DATA

# FIG. 6

# FIG. 7

# FIG. 8(I)

|      | 1 | 2 | 3 | 6 | 7 | 8 | 9 | 10 | 11 | 12 | 13 | 14 |
|------|---|---|---|---|---|---|---|----|----|----|----|----|
| 1st  | 0 |   |   |   |   |   |   |    |    |    |    |    |
| 2nd  | 0 |   |   |   |   |   |   |    |    |    |    |    |
| 3rd  | 0 |   |   |   |   |   |   |    |    |    |    |    |
| 4th  | 0 |   |   |   |   |   |   |    |    |    |    |    |
| 5th  | 0 |   |   |   |   |   |   |    |    |    |    |    |
| 6th  | 0 |   |   |   |   |   |   |    |    |    |    |    |
| 7th  | 0 |   |   |   |   |   |   |    |    |    |    |    |
| 8th  | 0 |   |   |   |   |   |   |    |    |    |    |    |

# FIG. 8(II)

|      | 1 | 2 | 3 | 6 | 7 | 8 | 9 | 10 | 11 | 12 | 13 | 14 |
|------|---|---|---|---|---|---|---|----|----|----|----|----|
| 1st  | 0 | 0 | 0 | 0 |   |   |   |    |    |    |    |    |
| 2nd  | 0 | 0 | 0 | 0 |   |   |   |    |    |    |    |    |
| 3rd  | 0 | 0 | 0 | 0 |   |   |   |    |    |    |    |    |
| 4th  | 0 | 0 | 0 | 0 |   |   |   |    |    |    |    |    |
| 5th  | 0 | 0 | 0 | 0 |   |   |   |    |    |    |    |    |
| 6th  | 0 | 0 | 0 | 0 |   |   |   |    |    |    |    |    |
| 7th  | 0 | 0 | 0 | 0 |   |   |   |    |    |    |    |    |
| 8th  | 0 | 0 | 0 | 0 |   |   |   |    |    |    |    |    |

# FIG. 8(III)

|      | 1 | 2 | 3 | 6 | 7 | 8 | 9 | 10 | 11 | 12 | 13 | 14 |
|------|---|---|---|---|---|---|---|----|----|----|----|----|
| 1st  | 0 | 0 | 0 | 0 | 0 |   |   |    |    |    |    |    |
| 2nd  | 0 | 0 | 0 | 0 | 0 |   |   |    |    |    |    |    |
| 3rd  | 0 | 0 | 0 | 0 | 0 |   |   |    |    |    |    |    |
| 4th  | 0 | 0 | 0 | 0 | 0 |   |   |    |    |    |    |    |
| 5th  | 0 | 0 | 0 | 0 | 0 |   |   |    |    |    |    |    |
| 6th  | 0 | 0 | 0 | 0 | 0 |   |   |    |    |    |    |    |
| 7th  | 0 | 0 | 0 | 0 | 0 |   |   |    |    |    |    |    |
| 8th  | 0 | 0 | 0 | 0 | 1 |   |   |    |    |    |    |    |

# FIG. 8(IV)

|      | 1 | 2 | 3 | 6 | 7 | 8 | 9 | 10 | 11 | 12 | 13 | 14 |
|------|---|---|---|---|---|---|---|----|----|----|----|----|
| 1st  | 0 | 0 | 0 | 0 | 0 | 1 |   |    |    |    |    |    |
| 2nd  | 0 | 0 | 0 | 0 | 0 | 1 |   |    |    |    |    |    |
| 3rd  | 0 | 0 | 0 | 0 | 0 | 1 |   |    |    |    |    |    |
| 4th  | 0 | 0 | 0 | 0 | 0 | 1 |   |    |    |    |    |    |
| 5th  | 0 | 0 | 0 | 0 | 0 | 1 |   |    |    |    |    |    |
| 6th  | 0 | 0 | 0 | 0 | 0 | 1 |   |    |    |    |    |    |
| 7th  | 0 | 0 | 0 | 0 | 0 | 1 |   |    |    |    |    |    |
| 8th  | 0 | 0 | 0 | 0 | 1 | 1 |   |    |    |    |    |    |

# FIG. 8(V)

|      | 1 | 2 | 3 | 6 | 7 | 8 | 9 | 10 | 11 | 12 | 13 | 14 |
|------|---|---|---|---|---|---|---|----|----|----|----|----|
| 1st  | 0 | 0 | 0 | 0 | 0 | 1 | 1 |    |    |    |    |    |
| 2nd  | 0 | 0 | 0 | 0 | 0 | 1 | 1 |    |    |    |    |    |
| 3rd  | 0 | 0 | 0 | 0 | 0 | 1 | 1 |    |    |    |    |    |
| 4th  | 0 | 0 | 0 | 0 | 0 | 1 | 1 |    |    |    |    |    |
| 5th  | 0 | 0 | 0 | 0 | 0 | 1 | 1 |    |    |    |    |    |
| 6th  | 0 | 0 | 0 | 0 | 0 | 1 | 1 |    |    |    |    |    |
| 7th  | 0 | 0 | 0 | 0 | 0 | 1 | 1 |    |    |    |    |    |
| 8th  | 0 | 0 | 0 | 0 | 1 | 1 | 1 |    |    |    |    |    |

# FIG. 8(VI)

|      | 1 | 2 | 3 | 6 | 7 | 8 | 9 | 10 | 11 | 12 | 13 | 14 |
|------|---|---|---|---|---|---|---|----|----|----|----|----|
| 1st  | 0 | 0 | 0 | 0 | 0 | 1 | 1 | 0  |    |    |    |    |
| 2nd  | 0 | 0 | 0 | 0 | 0 | 1 | 1 | 1  |    |    |    |    |
| 3rd  | 0 | 0 | 0 | 0 | 0 | 1 | 1 | 1  |    |    |    |    |
| 4th  | 0 | 0 | 0 | 0 | 0 | 1 | 1 | 1  |    |    |    |    |
| 5th  | 0 | 0 | 0 | 0 | 0 | 1 | 1 | 1  |    |    |    |    |
| 6th  | 0 | 0 | 0 | 0 | 0 | 1 | 1 | 1  |    |    |    |    |
| 7th  | 0 | 0 | 0 | 0 | 0 | 1 | 1 | 1  |    |    |    |    |
| 8th  | 0 | 0 | 0 | 0 | 1 | 1 | 1 | 0  |    |    |    |    |

# FIG. 8(VII)

|      | 1 | 2 | 3 | 6 | 7 | 8 | 9 | 10 | 11 | 12 | 13 | 14 |
|------|---|---|---|---|---|---|---|----|----|----|----|----|
| 1st  | 0 | 0 | 0 | 0 | 0 | 1 | 1 | 0  | 0  |    |    |    |
| 2nd  | 0 | 0 | 0 | 0 | 0 | 1 | 1 | 1  | 1  |    |    |    |
| 3rd  | 0 | 0 | 0 | 0 | 0 | 1 | 1 | 1  | 1  |    |    |    |
| 4th  | 0 | 0 | 0 | 0 | 0 | 1 | 1 | 1  | 1  |    |    |    |
| 5th  | 0 | 0 | 0 | 0 | 0 | 1 | 1 | 1  | 0  |    |    |    |
| 6th  | 0 | 0 | 0 | 0 | 0 | 1 | 1 | 1  | 0  |    |    |    |
| 7th  | 0 | 0 | 0 | 0 | 0 | 1 | 1 | 1  | 0  |    |    |    |
| 8th  | 0 | 0 | 0 | 0 | 1 | 1 | 1 | 0  | 0  |    |    |    |

# FIG. 8(VIII)

|      | 1 | 2 | 3 | 6 | 7 | 8 | 9 | 10 | 11 | 12 | 13 | 14 |
|------|---|---|---|---|---|---|---|----|----|----|----|----|
| 1st  | 0 | 0 | 0 | 0 | 0 | 1 | 1 | 0  | 0  | 0  | 0  | 0  |
| 2nd  | 0 | 0 | 0 | 0 | 0 | 1 | 1 | 1  | 1  | 1  | 1  | 0  |
| 3rd  | 0 | 0 | 0 | 0 | 0 | 1 | 1 | 1  | 1  | 1  | 1  | 0  |
| 4th  | 0 | 0 | 0 | 0 | 0 | 1 | 1 | 1  | 0  | 0  | 0  | 0  |
| 5th  | 0 | 0 | 0 | 0 | 0 | 1 | 1 | 1  | 0  | 0  | 0  | 0  |
| 6th  | 0 | 0 | 0 | 0 | 0 | 1 | 1 | 1  | 0  | 0  | 0  | 0  |
| 7th  | 0 | 0 | 0 | 0 | 0 | 1 | 1 | 1  | 0  | 0  | 0  | 0  |
| 8th  | 0 | 0 | 0 | 0 | 1 | 1 | 1 | 0  | 0  | 0  | 0  | 0  |

# FIG. 9

START

↓

$y \leftarrow 1$

↓

$z \leftarrow 1$
$x \leftarrow 1$

↓

$z \leftarrow z \oplus T(x, y)$

↓

$T(x, y) \leftarrow z$

↓

$x \leftarrow x + 1$

↓

$x > 48$    N

↓ Y

$y \leftarrow y + 1$

↓

$y > 6$    N

↓ Y

END

## FIG. 10